# EUROPÄISCHE PATENTANMELDUNG

(11) **EP 0 714 054 A2**
(43) Veröffentlichungstag der Anmeldung: **29.05.1996**
(21) Anmeldenummer: 95117783.1
(22) Anmeldetag: 11.11.1995
(51) Int. Cl.: G05D 11/13, B27K 7/00

(54) **Dosier- und Verteilanlage für eine Schneidemulsion**

(30) Priorität: 25.11.1994 DE 4442094
(71) Anmelder: Th. Goldschmidt AG, D-45127 Essen (DE)
(72) Erfinder: Nolte, Reimund, D-45289 Essen (DE); Peggau, Jörg, D-45357Essen (DE)

(57) **Zusammenfassung**

Eine Dosier- und Verteilanlage für eine Schneidemulsion ist durch eine Proportionaldosierpumpe (1) gekennzeichnet, mittels welcher über getrennte Leitungen einerseits Wasser und andererseits ein Konzentrat aus natürlichen Fettsäuren und Aromastoffen in einen Mischbehälter (7) einführbar sind, in dem unter Mitwirkung eines, in einer Bypaßleitung (14) angeordneten Hochleistungsmischers (13) die Schneidemulison bereitgestellt wird, wobei diese über eine, an die Bypaßleitung (14) angeschlossene Zweigleitung (16) und eine, zumindest eine pneumatisch angetriebene Pumpe aufweisende Versorgungseinheit (17) an einen Verteilerblock (20) weitergeführt wird, an den ausgangsseitig Emulsionsleitungen (24,25) angeschlossen sind, die unmittelbar zu Sprühdüsen führen, über welche die Schneidemulsion ihrem unmittelbaren Wirkungsort zugeführt wird. Über eine Steuerungseinrichtung (28), die mit einem Füllstandswächter (8) des Mischbehälters (7) in Wirkverbindung steht, wird mittels eines Ventils (6) der Füllstand innerhalb des Mischbehälters (7) innerhalb definierter, einen unteren und einen oberen Füllstand (9,10) beschreibender Grenzen gesteuert - vorausgesetzt, daß in einem Vorratsbehälter (4) eine ausreichende Menge an Konzentrat vorhanden ist. Die Versorgunseinheit (17) saugt über die Zweigleitung (16) nach Maßgabe einer extern vorgegebenen Zeittaktung Schneidemulsion über die Zweigleitung (16) aus der Bypaßleitung (14) ab und verteilt diese auf die Emulsionsleitungen (24,25). Die Dosier- und Sprühanlage ist beispielsweise für eine Verwendung in der Brotindustrie bestimmt und ermöglicht eine die unmittelbare Umgebung nicht belastende, einen hygienischen Betrieb ermöglichende Versprühung von Schneidemulsion beispielsweise auf Messer, Transportketten usw.

## Beschreibung

Die Erfindung bezieht sich auf eine Dosier- und Verteilanlage entsprechend dem Oberbegriff des Anspruchs 1.

In der Brotindustrie ist bekanntlich die Verwendung von Sojaöl als Schneidhilfsmittel gebräuchlich, mittels welchem beispielsweise Messer besprüht werden, welches in Abhängigkeit von der jeweils zu behandelnden Brotsorte in unterschiedlichen Mengen geschieht. Die Art der Anwendung dieses Schneidhilfsmittels führt jedoch zu einer bedeutenden Umweltbeeinträchtigung, da sich dieses Mittel in der Form feinster Tröpfchen in unkontrollierter Weise in der Umgebung ausbreitet, niederschlägt, geruchliche Belästigungen für das hier tätige Personal mit sich bringt und gleichermaßen ein Ausbreiten von Mikroorganismen der unterschiedlichsten Art begünstigt. Die Verwendung dieses Schneidhilfsmittels ist durch hygienische Probleme belastet, deren Beherrschung mit einem großen Aufwand verbunden ist.

Als Ersatz für Sojaöl als Schneidhilfsmittel ist eine wäßrige Emulsion bekannt, welche natürliche Fettsäuren, natürliche Aromastoffe und weitere Komponenten enthalten kann, die beispielsweise eine biozide Wirkung entwickeln, deren Verwendung jedoch unter dem Gesichtspunkt der Lebensmittelhygiene unbedenklich ist. Ein Vorteil dieses Schneidhilfsmittels besteht darin, daß die bei einer Sojaölbesprühung auftretende Fettatmosphäre vermieden wird.

Es ist die Aufgabe der Erfindung, eine Dosier- und Verteilanlage für eine Schneid- bzw. Schmieremulsion in der Form beispielsweise der oben aufgeführten wäßrigen Emulsion zu entwerfen, die in einfacher Weise eine sehr genaue Dosierung dieses Mittels, und zwar in einer auf den Einzelfall angepaßten Weise sowie nach Maßgabe geringstmöglicher Mengen ermöglicht. Gelöst ist diese Aufgabe bei einer solchen Anlage durch die Merkmale des Kennzeichnungsteils des Anspruchs 1.

Ausgangspunkt ist eine wäßrige Emulsion, der wenigstens eine weitere Komponente hinzugefügt wird, wobei aus diesen beiden Komponenten in einem Mischbehälter eine sprühfähige Emulsion gebildet und in Bereitschaft gehalten wird. Diese sprühfähige Emulsion wird in einer Versorgungseinheit, die dem Mischbehälter - in Durchflußrichtung der Emulsion gesehen - nachgeordnet ist, unter einen solchen Druck gesetzt, der zur Versorgung der genannten Sprühdüsen geeignet und ausreichend ist. Die Sprühdüsen sind steuerbar ausgebildet, insbesondere mit Hinblick auf eine mengenmäßige Dosierung der abgegebenen Emulsion. Die einzelnen Komponenten dieser Emulsion werden erst innerhalb der erfindungsgemäßen Anlage emulgiert, wobei durch geeignete Maßnahmen dafür Sorge getragen werden muß, daß ein unkontrolliertes Austreten sowohl der sprühfähigen Emulsion als auch einzelner Komponenten derselben aus der Anlage verhindert wird. Mittels einer übergeordneten Steuerung wird der Betrieb der genannten Einrichtung, des Mischbehälters und der Versorgungseinheit nach Maßgabe der jeweils erforderlichen Menge an Emulsion geregelt. Im Ergebnis steht hiermit eine Dosier- und Verteilanlage für eine Schneid- oder Schmieremulsion zur Verfügung, welche für ein genau dosiertes und dem Einzelfall angepaßtes Auftragen der Emulsion an den jeweiligen Wirkungsstellen geeignet ist. Bei letzteren handelt es sich beispielsweise um Messer, jedoch auch Transportketten sowie mit diesen in Verbindung stehende Teile. Hinzu treten allgemeine Maschinenteile, die im Rahmen der Verpackung oder auch der Handhabung eingesetzt sind.

Gemäß den Merkmalen des Anspruchs 2 ist die genannte Einrichtung als Proportionaldosierpumpe ausgbildet, wobei der Mischbehälter in Verbindung mit der übergeordneten Steuerungseinrichtung sowie einem Füllstandswächter mit einer Füllstandsregelung versehen ist, so daß der Füllstand des Mischbehälters entweder konstant gehalten wird oder innerhalb vorgebbarer, jeweils einen unteren und einen oberen Füllstand beschreibender Niveaus gehalten wird. Die Proportionaldosierpumpe wird somit lediglich dann aktiviert, wenn dem Mischbehälter Emulsion entnommen wird und sein Füllstand dementsprechend absinkt. Zweckmäßigerweise ist die Proportionaldosierpumpe mit voneinander getrennten Leitungen für die Komponenten der Emulsion ausgerüstet, die zu dem Mischbehälter führen, wobei die Mengenanteile der einzelnen Komponenten einstellbar sind.

Um mittels des Mischbehälters einen feinen Verteilungszustand der zu bildenden Emulsion zu erreichen, ist dieser mit einer Homogenisiereinheit ausgerüstet, die in einer Bypaßleitung angeordnet ist, die entsprechend den Merkmalen des Anspruchs 3 unter anderem einen Hochleistungsmischer aufweist. Dieser kann beispielsweise als Ultraturax ausgebildet sein, wobei eine Durchlaufkammer unterhalb des unteren Füllstandsniveaus des Mischbehälters angeordnet ist. Der Hochleistungsmischer wird zweckmäßigerweise intervallweise betätigt, beispielsweise bei Neubefüllung des Mischbehälters oder ansonsten nach Maßgabe vorgebbarer Zeitintervalle. Wesentlich ist insoweit, daß auf diesem Wege innerhalb des Mischbehälters der Verteilungszustand der Emulsion stabilisiert wird.

Indem gemäß den Merkmalen des Anspruchs 4 der obere Anschluß der Bypaßleitung - in einer Querschnitsebene des Mischbehälters gesehen - unter einem Winkel zu einer Radiuslinie verläuft, ergibt sich ein hydraulischer Rühreffekt, der ebenfalls zur Homogenisiarung der Emulsion beiträgt. Ersatzweise für diese Maßnahme kann naturgemäß jedoch auch ein Rührer eingesetzt werden. Der hydraulische Rühreffekt wird durch den Hochleistungsmischer unterstützt, der oberhalb der genannten Durchlaufkammer einen Überdruck erzeugt, so daß sich eine ausreichende Strömungsgeschwindigkeit ergibt.

Die Bypaßleitung ist entsprechend den Merkmalen des Anspruchs 5 ferner mit einem Meßfühler zur Erfassung der Mengenanteile der Komponenten der Emulsion ausgerüstet. Auf diese Weise ergibt sich die Möglichkeit, die Zusammensetzung der Emulsion kontinuierlich zu überwachen, so daß eine unpassende Zusammensetzung der Emulsion sofort erkennbar wird. Über die Steuerungseinrichtung kann in diesem Fall ein entsprechendes Alarmsignal ausgelöst werden, von dem wiederum Steuerungsfunktionen abgeleitet werden können. Beispielsweise kann es sich bei dem Meßfühler um eine die elektrische Leitfähigkeit erfassende Meßelektrode handeln.

Der Zweck der Versorgungseinheit besteht gemäß den Merkmalen des Anspruchs 6 darin, die Emulsion unter einen möglichst konstanten Druck zu setzen, mittels welchem eingangsseitig ein Verteilerblock beaufschlagt wird, der ausgangsseitig über zwischengeordnete Druckregeleinheiten und sich an diese anschließende Emulsionsleitungen mit den genannten Sprühdüsen in Verbindung steht.

Die Merkmale der Ansprüche 7 bis 9 sind auf eine weitere Ausgestaltung der Versorgungseinheit gerichtet. In deren Rahmen wird vorzugsweise eine pneumatisch antreibbare Pumpe eingesetzt, da diese in einfachster Weise regelbar ist. Zur weiteren Konstanthaltung des Druckes ist der Verteilerblock in eine Bypaßleitung eingesetzt, von der eine Leitung zurück zu der Versorgungseinheit führt. Gleichzeitig wird auf diese Weise auch ein Beitrag zur Stabilisierung der Emulsion geleistet. Die der Versorgungseinheit, insbesondere dem Verteilerblock nachgeordneten Druckregeleinheiten ermöglichen vorzugsweise eine individuelle Druckregelung einer jeden Emulsionsleitung. Auf diese Weise bestehen optimale Möglichkeiten, den Sprühdruck an jeder Sprühdüse den dort anstehenden technisch bedingten Bedürfnissen anzupassen.

Die Merkmale der Ansprüche 10 bis 12 sind auf die weitere Ausbildung der Sprühdüsen gerichtet. Diese sind hiernach pneumatisch steuerbar ausgebildet und stehen mit der Steuerungseinrichtung in Wirkverbindung. Um einen möglichst sparsamen Umgang mit der Emulsion zu gewährleisten, wird erfindungsgemäß ein lediglich taktweiser Betrieb der Sprühdüsen vorgeschlagen, wobei das auslösende Steuersignal für diese Sprühdüsen aus der Bewegung eines Messers, einer Transportkette oder eines sonstigen Maschinenteils unmittelbar abgeleitet werden kann.

Auch auf diese Weise wird zu einer bedarfs- und insbesondere auch produktgerechten Dosierung der Emulsion beigetragen.

Auch die Homogenisiereinheit, insbesondere der dortige Hochleistungsmischer sind entsprechend den Merkmalen der Ansprüche 13 bis 14 für einen taktweisen, an den tatsächlichen Bedürfnissen orientierten Betrieb hin ausgerichtet. Wesentlich ist hier, daß die Emulsion in einem stabilen Zustand gehalten wird.

Die Erfindung wird im folgenden unter Bezugnahme auf das, in den Zeichnungsfiguren schematisch wiedergegebene Ausführungsbeispiel eines Anlagenschemas beschrieben werden. Es zeigen
Fig. 1 eine Darstellung der der Bereitstellung einer Schneidemulsion dienenden Anlage;
Fig. 2 eine Darstellung einer vollständigen Dosier- und Sprühanlage, die einer Brot-Schneidelinie zugeordnet ist.

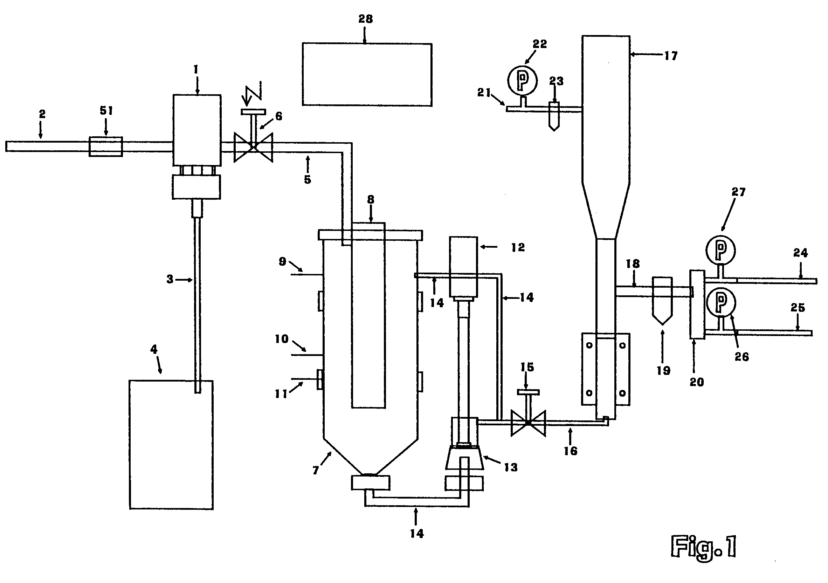

Mit 1 ist in Fig. 1 eine Proportionaldosierpumpe bezeichnet, die eingangsseitig mit einer Wasserleitung 2 und einer, ein Konzentrat aus natürlichen Fettsäuren und Aromastoffen führenden Leitung 3 in Verbindung steht. Die Wasserleitung 2 führt zu einem nicht dargestellten Hauptanschluß, während die Leitung 3 an einen, das genannte Konzentrat beinhaltenden Vorratsbehälter 4 angeschlossen ist.

Die Proportionaldosierpumpe 1 ermöglicht die Förderung von Wasser und Konzentrat, und zwar nach Maßgabe eines vorzugsweise vorgebbaren Mengenverhältnisses. Aus Sicherheitsgründen, nämlich um im Falle auftretender Undichtigkeiten zu verhindern, daß das Konzentrat in das Leitungswasser zurückfließen kann, ist die Proportionaldosierpumpe 1 derart ausgebildet, daß das Wasser getrennt von dem Konzentrat gefördert wird, so daß auch voneinander getrennte Ausgangsleitungen vorgesehen sind. In der Zeichnung dargestellt ist jedoch nur eine Ausgangsleitung 5 für das Wasser, in deren Verlauf ein vorzugsweise elektromagnetisch betätigbares Ventil 6 angeordnet ist. Zeichnerisch nicht dargestellt ist eine, das Konzentrat führende Ausgangsleitung. Der maximale Durchfluß des Ventils 6 ist zweckmäßigerweise begrenzt. Dies wird erreicht durch den Einbau eines Durchflußmengenreglers 51, der dem Ventil 6 vorgeschaltet ist.

Mit 7 ist ein, im unteren Bereich zylindrisch-konisch geformter Mischbehälter bezeichnet, in dem eine aus Wasser und dem genannten Konzentrat bestehende Emulsion bereitgestellt wird.

Der Mischbehälter 7 steht zu diesem Zweck eingangsseitig mit der Ausgangsleitung 5 und einer weiteren, das Konzentrat führenden Leitung in Verbindung, wobei diese beiden Leitungen unterhalb des obersten Flüssigkeitsniveaus innerhalb des Mischbehälters an diesen angeschlossen sind. Der Mischbehälter 7 ist mit einem Füllstandswächter 8 ausgerüstet, der vorzugsweise nach elektrischen Funktionsprinzipien arbeitet und bei Erreichen eines oberen Füllstandes 9 sowie eines unteren Füllstandes 10 entsprechende Meßsignale erzeugt.

Mit 11 ist ein Füllstand bezeichnet, der über den Füllstandswächter 8 oder in sonstiger Weise eine Alarmmeldung auslöst. Dieser Fülltand 11 befindet sich noch unterhalb des unteren Füllstandes 10 und definiert einen äußersten Grenzwert, der nicht unterschritten werden darf.

Mit 12 ist eine Homogenisiereinheit bezeichnet, welche unter anderem einen Hochleistungsmischer 13 umfaßt, hier einen Ultraturax, der in einer Bypaßleitung 14 des Mischbehälters 7 angeordnet ist. Diese Bypaßleitung 14 führt von dem untersten Ende des Mischbehälters über den Hochleistungsmischer 13 zu einem, dem oberen Ende des Mischbehälters 7 benachbarten Bereich zurück. Der mit sehr hohen Drehzahlen betriebene Hochleistungsmischer 13 erzeugt bezüglich seiner Durchlaufkammer eingangsseitig einen Unterdruck und ausgangsseitig einen Überdruck und bewirkt eine ausreichende Durchmischung der beiden Komponenten, nämlich des Konzantrates und des Wassers dahingehend, daß eine durch feinste Verteilung des Konzentrates gekennzeichnete Emulsion entsteht. Gleichzeitig wird durch diese Homogenisiereinheit 12 dieser Zustand der Emulsion aufrechterhalten.

Zur Überwachung einer korrekten Dosierung kann an geeigneter Stelle der Bypaßleitung 14 eine Meßelektrode angeordnet sein, welche beispielsweise über eine Messung der elektrischen Leitfähigkeit die Feststellung der jeweiligen Dosierung bzw. der Zusammensetzung der bereitgestellten Schneidemulsion ermöglicht. Auf eine zeichnerische Darstellung dieser Meßelektrode ist jedoch verzichtet worden.

Die Bypaßleitung 14 steht über eine durch ein Ventil 15 gesicherte Zweigleitung 16 mit einer Versorgungseinheit 17 in Verbindung. Die Versorgungseinheit 17 dient der Bereitstellung der Schneidemulsion unter einem konstanten Druck und führt ausgangsseitig über eine Leitung 18 und ein Filter 19 zu einem Verteilerblock 20, von dem eine zeichnerisch nicht dargestellte Bypaßleitung zurück zu der Versorgungseinheit 17 führt. Der über diese Bypaßleitung strömende, im allgemeinen geringfügige Rücklauf trägt weiter zur Konstanthaltung des Versorgungsdruckes bei.

Die Versorgungseinheit besteht im übrigen aus einer pneumatisch angetriebenen Druckerhöhungspumpe, welche die Schneidemulsion auf einen konstanten Druck bringt.

Mit 21 ist die über eine Druckregeleinheit 22 und einen Filter 23 führende Druckluftversorgungsleitung 21 der Versorgungseinheit 17 bezeichnet, wobei letztgenannte Leitung mit einer zeichnerisch nicht dargestellten Druckluftquelle in Verbindung steht.

Die ausgangsseitig von dem Verteilerblock 20 führenden Emulsionsleitungen 24, 25, in deren Verlauf jeweils Druckregeleinheiten 26, 27 angeordnet sind, führen unmittelbar zu den Sprühdüsen.

Schließlich ist mit 28 eine Steuerungseinrichtung bezeichnet, welche der Energieversorgung, jedoch insbesondere Meß-, Steuer- bzw. Regelungszwecken dient. Auf eine Darstellung zugehöriger elektrischer Verbindungsleitungen ist jedoch verzichtet worden. Diese Steuerungseinrichtung (28) ist als speicherprogrammierbare Steuerung (SPS-Steuerung) ausgebildet. Sie dient unter anderem der Steuerung des Ventils 6 nach Maßgabe des, über den Füllstandswächter 8 signalisierten Füllstandes des Mischbehälters 7, der Steuerung der Homogenisierungseinheit 12, so z.B. der Einstellung eines Betriebes mit einer definierten Nachlaufzeit, z.B. von sechs Minuten bei Zulauf von neuem Gemisch oder bei Standzeiten der Anlage gemäß einem zeitgetakteten Betrieb, wonach die Homogenisierungseinheit für ein Zeitintervall von beispielsweise sechs Minuten jeweils nach Ablauf von zwei Stunden eingeschaltet wird. Sie dient darüber hinaus Sicherheitsfunktionen wie der Signalisierung einer Alarmmeldung bei Erreichen des unteren Füllstandes 11, bei nicht mehr akzeptabler Dosierung bzw. Zusammensetzung der Emulsion, bei Ausfall der Druckluftversorgung, und zwar in den jeweiligen Steuer- jedoch auch Arbeitskreisen, wobei beispielsweise bei Erreichen des unteren Füllstandes 11 die gesamte Anlage abgeschaltet wird. Die Leitung 3 endet in dem Vorratsbehälter 4 mit einer in der Zeichnung nicht dargestellten Ansauglanze. Diese mißt über einen, in der Zeichnung ebenfalls nicht dargestellten Staudruckschalter, der der Steuerungseinheit vorgeschaltet ist, den Füllstand im Vorratsbehälter 4. Bei Erreichen einer minimalen Füllstandsmenge im Vorratsbehälter 4 wird ein Alarm, nämlich eine Leermeldung ausgelöst und die Dosieranlage abgeschaltet bis der Vorratsbehälter gewechselt wird.

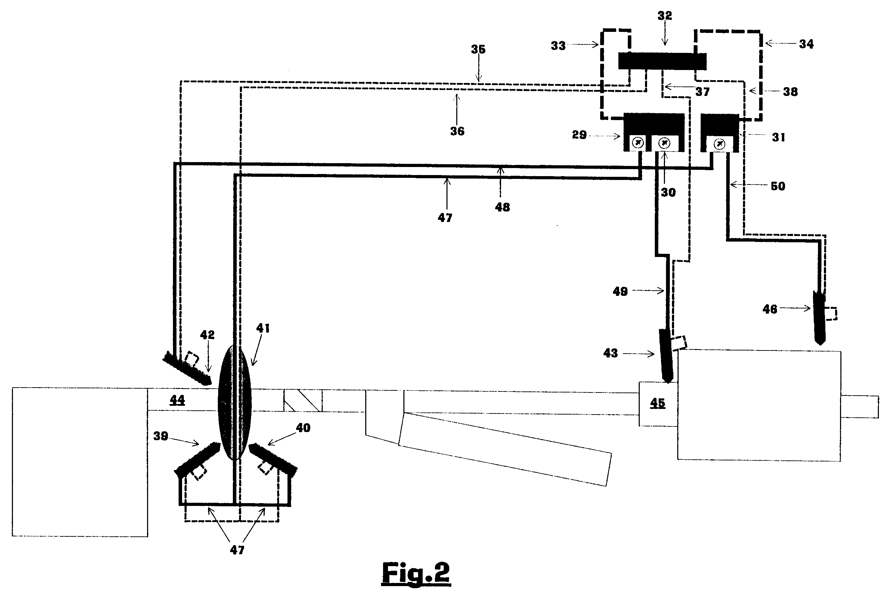

Es wird im folgenden ergänzend auf die zeicherische Darstellung gemäß Fig. 2 Bezug genommen.

Mit 29, 30, 31 sind in Fig. 2 jeweils Druckregeleinheiten bezeichnet, die in zeichnerisch nicht dargestellter Weise mit den Emulsionsleitungen 24, 25 eingangsseitig in Verbindung stehen.

Mit 32 ist ein Verteilerblock für Druckluft bezeichnet, der seinerseits mit einer zeichnerisch nicht dargestellten Druckluftquelle in Verbindung steht. An den Verteilerblock 32 sind einerseits Leitungen 33, 34 zur Führung der Arbeitsluft für die Druckregeleinheiten 29, 30, 31 und andererseits Leitungen 35, 36, 37 und 38 zur Führung von Steuerluft zwecks pneumatischer Betätigung der im folgenden noch zu beschreibenden Sprühdüsen angeschlossen.

Die Zeichnung zeigt beispielhaft Sprühdüsen 39, 40, die einem Messer 41 zugeordnet sind, Sprühdüsen 42, 43, die einer Transportkette 44 bzw. einem Zahnrad 45 derselben zugeordnet sind und eine Sprühdüse 46, die während des Aufblasens von der Verpackung von Brot dienenden Tüten aktivierbar ist.

Die beiden, mit dem Messer 41 zusammenwirkenden Sprühdüsen 39, 40 stehen über eine Leitung 47 mit der Druckregeleinheit 29 in Verbindung, während die übrigen Sprühdüsen 42, 43 und 46 jeweils über Leitungen 48, 49 und 50 mit den Druckregeleinheiten 30 bzw. 31 in Verbindung stehen. Im Regelfall steht die, den Sprühdüsen 39, 40 zugeführte Emulsion unter einem geringeren Druck als die Emulsionen, welche über die Leitungen 48, 49 und 50 den jeweiligen Sprühdüsen 42, 43 und 46 zugeführt werden.

Die Druckregeleinheiten 29, 30, 31 ermöglichen die jeweils auf die einzelne Sprühdüse bzw. auf Gruppen von Sprühdüsen bezogene individuelle Druckeinstellung.

Die Betätigung, nämlich Öffnung der Sprühdüsen 39, 40 erfolgt in Abhängigkeit von der Betätigung des Messers 41. Ein Sprühen über die Sprühdüsen 42, 43 findet taktweise während des Vorschubs der Transportkette 44 statt, wobei für die Besprühung der Transportkette einerseits und des Zahnrades andererseits unterschiedliche Zeittakte vorgegeben werden können. Der Sprühvorgang über die Düse 46 ist an den Vorgang des Aufblasens der Tüten geknüpft, die der Verpackung des geschnittenen Brotes dienen. Hier wird während des Aufblasens der Verpackungsbeutel gesprüht, wobei beispielsweise für das Verpacken von 500 g Brot etwa zwei Sekunden benötigt werden.

Die gezeigte Anordnung der Sprühdüsen entlang einer Schneidelinie bis zur Verpackung des geschnittenen Brotes ist lediglich beispielhaft zu verstehen und es können insbesondere auch weitere Sprühdüsen an geeigneter Stelle vorgesehen werden. Wesentlich ist, daß die Ansteuerung der einzelnen Sprühdüsen pneumatisch erfolgt und durch die Bewegung des Messers, der Transportkette oder sonstiger Vorgänge während des Verpackens nach vorgebbaren Zeittakten einstellbar ausgelöst wird. Auf eine zeichnerische Wiedergabe entsprechender elektrischer Steuerungsleitungen ist wiederum aus Gründen der Übersichtlichkeit verzichtet worden. Während des Sprühvorgangs wird jeweils über die Druckregeleinheiten 29 bis 31 ein konstanter Druck in den Leitungen 47 bis 50 aufrechterhalten, wobei über den Verteilerblock 20 (Fig. 1) bzw. die Versorgungseinheit 17, die Zweigleitung 16 weitere Emulsion aus der Bypaßleitung 14 des Mischbehälters 7 nachgeführt wird und wobei bei entsprechendem Absinken des Füllstandes an Emulsion innerhalb des Mischbehälters 7 über die Steuerung 28 durch entsprechende Betätigung des Ventils 6 weitere Emulsion bereitgestellt wird.

Die auf diesem Wege über die Sprühdüsen verteilten Emulsionsmengen werden kleinstmöglich gehalten, so daß sich kaum Beeinträchtigungen der Umgebung der Sprühdüsen ergeben und gegenüber dem eingangs dargelegten Stand der Technik eine wesentliche Verbesserung der hygienischen Bedingungen gegeben ist. Günstig wirkt sich in diesem Zusammenhang der Wasseranteil der Schneid- bzw. Schmieremulsion aus.

## Patentansprüche

1. Dosier- und Verteilanlage für eine Schneid- oder Schmieremulsion, gekennzeichnet durch
- eine Einrichtung zur Förderung der wenigstens zwei Komponenten der Emulsion nach Maßgabe einstellbarer Mengenanteile,
- einen Mischbehälter (7), in dem eine sprühfähige Emulsion gebildet und in Bereitschaft gehalten wird und
- eine Versorgungseinheit (17), durch die die sprühfähige Emulsion auf Leitungen verteilbar ist, die mit Sprühdüsen (39,40,42,43,46) in Verbindung stehen,
- wobei die genannte Einrichtung, der Mischbehälter (7) und die Versorgungseinheit (17) untereinander in Verbindung stehen.

2. Anlage nach Anspruch 1, dadurch gekennzeichnet,
- daß die genannte Einrichtung als Proportionaldosiermpumpe (1) ausgebildet ist,
- daß der Mischbehälter (7) mit einem Füllstandswächter (8) ausgerüstet ist und
- daß zumindest ein in der, die Proportionaldosierpumpe (1) mit dem Mischbehälter (7) verbindenden Leitung angeordnetes Ventil (6) und der Füllstandswächter (8) mit einer Steuerungseinrichtung (28) mit dem Ziel einer Füllstandsregelung und Leermeldung untereinander in Wirkverbindung stehen.

3. Anlage nach Anspruch 1 oder 2, dadurch gekennzeichnet,
- daß dem Mischbehälter (7) eine Bypaßleitung (14) zugeordnet ist und
- daß im Rahmen der Bypaßleitung (14) eine Homogenisierungseinheit (12), die unter anderem einen Hochleistungsmischer (13) aufweist, angeordnet ist.

4. Anlage nach Anspruch 3, dadurch gekennzeichnet,
- daß die Bypaßleitung (14) am tiefsten Punkt des Mischbehälters (7) eingangsseitig und im Bereich des oberen Füllstandsniveaus ausgangsseitig an den Mischbehälter (7) angeschlossen ist und
- daß der obere Abschluß der Bypaßleitung (14) - in einer Querschnittsebene des Mischbehälters (7) gesehen - unter einem Winkel zu einer Radiuslinie oder einer vergleichbaren Linie verläuft.

5. Anlage nach Anspruch 3 oder 4, dadurch gekennzeichnet,
- daß die Bypaßleitung (14) mit wenigstens einem Meßfühler zwecks Erfassung der Mengenanteile der Komponenten der Emulsion ausgerüstet ist und
- daß der Meßfühler mit der Steuerungseinrichtung (28) in Verbindung steht.

6. Anlage nach einem der vorangegangenen Ansprüche 1 bis 5, dadurch gekennzeichnet,
- daß die Versorgungseinheit (17) zumindest eine Pumpe umfaßt,
- daß die Versorgungseinheit (17) ausgangsseitig mit einem Verteilerblock (20) in Verbindung steht und
- daß dem Verteilerblock (20) Druckregeleinheiten (26,27;29,30,31) nachgeordnet sind.

7. Anlage nach Anspruch 6, dadurch gekennzeichnet,
- daß im Rahmen der Versorgungseinheit (17) zumindest eine pneumatisch antreibbare Pumpe eingesetzt ist.

8. Anlage nach Anspruch 6 oder 7, dadurch gekennzeichnet,
- daß der Verteilerblock (20) im Rahmen einer Bypaßleitung angeordnet ist, die der Versorgungseinheit (17) zugeordnet ist.

9. Anlage nach einem der vorangegangenen Ansprüche 6 bis 8, dadurch gekennzeichnet,
- daß die Druckregeleinheiten (29,30,31) individuell einer jeden Emulsionsleitung (24,25) zugeordnet sind.

10. Anlage nach einem der vorangegangenen Ansprüche 1 bis 9, dadurch gekennzeichnet,
- daß die Sprühdüsen (39,40,42,43,46) steuerbar ausgebildet sind und mit der Steuerungseinrichtung (28) in Wirkverbindung stehen.

11. Anlage nach Anspruch 10, dadurch gekennzeichnet,
- daß die Sprühdüsen (39,40,42,43,46) pneumatisch steuerbar ausgebildet sind.

12. Anlage nach einem der vorangegangenen Ansprüche 2 bis 11, dadurch gekennzeichnet,
- daß die Sprühdüsen (39,40,42,43,46) und die Steuerungseinrichtung (28) nach Maßgabe externer Steuersignale für einen getakteten Betrieb bestimmt und ausgebildet sind.

13. Anlage nach einem der vorangegangenen Ansprüche 3 bis 12, dadurch gekennzeichnet, daß die Homogenisierungseinheit (12) mit der Steuerungseinrichtung (28) in Verbindung steht.

14. Anlage nach Anspruch 13, dadurch gekennzeichnet,
- daß der Hochleistungsmischer (13) und die Steuerungseinrichtung (28) für einen intervallweisen Betrieb bestimmt und ausgestaltet sind.
